# EUROPEAN PATENT APPLICATION

(11) **EP 4 826 542 A1**
(43) Date of publication of application: **21.10.2026**
(21) Application number: 26171238.4
(22) Date of filing: 08.04.2026
(51) Int. Cl.: G06F 11/07, G06F 11/34

(54) **DYNAMIC CONTENT-AWARE DATA SAMPLING**

(30) Priority: 17.04.2025 US 202519181766
(71) Applicant: Microsoft Technology Licensing, LLC, Redmond, WA 98052 (US)
(72) Inventor: SIVAKUMAR, Arunachallam, Redmond, Washington, 98052 (US); LEV, Guy, Redmond, Washington, 98052 (US); YANG, Li, Redmond, Washington, 98052 (US)
(74) Representative: CMS Cameron McKenna Nabarro Olswang LLP

(57) **Abstract**

The techniques describe dynamic content-aware data sampling that adjusts a sampling rate of data associated with a service based on the content of the data. More specifically, if the data to be logged indicates that the service is operating normally, then the sampling rate is adjusted lower as the logged data has limited purpose provided the service is likely not experiencing an issue. In contrast, if the data indicates that the service is operating abnormally, then the sampling rate is adjusted higher as the logged data has elevated purpose provided the service may be experiencing an issue. The dynamic content-aware data sampling is implemented using program code generated by an artificial intelligence agent (e.g., a generative language model) based on service owner requirements, as well as historical data patterns and/or usage patterns.

## Description

A cloud provider such as MICROSOFT AZURE, AMAZON WEB SERVICES, GOOGLE CLOUD, etc. is configured to provide resources for various services (e.g., an applications). A service may be owned and/or operated by a tenant of the cloud provider. A tenant may be a customer, a business, an organization, a client, an individual user, and so forth. Alternatively, a service may be owned and/or operated by a defined entity (e.g., administrative entity) that is part of the cloud provider, and thus, the service may be a cloud service that is configured to support and enable execution of tenant services (e.g., a cloud service is tasked with managing orchestration and deployment via KUBERNETES). The datacenters and other infrastructure that comprise the cloud provider are constructed with a variety of different types of "cloud" resources (e.g., processing resources, storage resources, networking resources, power resources, temperature control resources) which work together to execute the various services.

Typically, cloud providers and/or servicer owners implement monitoring techniques that collect and/or analyze data that has been logged. The logged data is associated with metrics, events, and/or messages that are useable to evaluate the performance, the health, and/or the reliability of the service. Moreover, the logged data can be used to determine if the service is currently experiencing, or previously experienced, an issue (e.g., an outage) and/or to identify and mitigate the issue based on an analysis of the logged data. One issue with logging data for a service relates to the amount of cloud resources that logging requires to process and/or store the logged data provided the increasing number of services being executed via cloud providers.

### SUMMARY

The system disclosed herein implements dynamic content-aware data sampling that adjusts a sampling rate of data associated with a service based on the content of the data. More specifically, if the data to be logged indicates that the service is operating normally, then the sampling rate is adjusted lower as the logged data has limited purpose provided the service is likely not experiencing an issue. The sampling rate is a number of retained data values divided by a total number of incoming data values available for sampling. In contrast, if the data indicates that the service is operating abnormally, then the sampling rate is adjusted higher as the logged data has elevated purpose provided the service may be experiencing an issue.

Generally, cloud providers typically implement data sampling at a fixed rate. The fixed rate is higher to ensure there is a sufficient amount of logged data to analyze for issue identification and mitigation purposes. Additionally, the fixed rate is typically used for similar types of data across a large set of services owned by different tenants and/or administrative entities. Consequently, an excessive amount of cloud resources is required to process and/or store the logged data that has been sampled at a high fix rate. Alternatively, cloud providers may implement data sampling dynamically based solely on a volume of data.

The dynamic content-aware data sampling described herein reduces the amount of cloud resources (e.g., the volume of storage needed, the number of processing cycles required) for data logging purposes by limiting the sampling rate during normal operations of the service. Moreover, the dynamic content-aware data sampling described herein retains critical and/or relevant data (e.g., prevents data loss) by increasing the sampling rate during events and/or changes that cause abnormal operations of the service. Consequently, the adaptive approach to sampling described herein ensures that critical data that is likely to explain an issue is retained during periods of abnormal operations.

The dynamic content-aware data sampling described herein goes beyond fixed rate and/or volume-based sampling by dynamically adjusting the sampling rate based on the actual data content and a service owner's specific needs and goals. More specifically, the dynamic content-aware data sampling described herein intelligently identifies and retains data that signals abnormalities (e.g., anomalies) and/or contains high-value insights most relevant to service owners rather than treating all the data equally. By aligning data retention with what matters more to service owners, e.g., operational efficiency, security, or compliance, the approach described herein ensures that observability remains conscient of the amount of resources used and highly actionable.

The system described herein uses artificial intelligence (AI), such as one or more AI agents, to implement the dynamic content-aware data sampling. The system is configured to access historical data values in a dataset associated with a service. A dataset is a structured collection of data. In one example, the structure of the dataset reflects a time sequence at which the service generates and/or provides data values for the dataset. The data values in the dataset can be related to a type of data (alternatively referred to as a "metric"). Example types of data include latency, total number of requests, total number of failed requests, throughput, available capacity, a number of declined payments, a number of failed transactions, or any other type of data that is notable for evaluating the performance, the health, and/or the reliability of the service. In an embodiment, the system may access the historical data values in the dataset via the exposure of an application programming interface (API) to resources (e.g., storage in the cloud, storage on-premises) of a service owner. That is, the API can be used to receive and/or retrieve the historical data values.

The system is further configured to access, e.g., via the API, service owner usage indicators (e.g., queries, summary rules, alert rules) that describe how a service owner uses the dataset and/or text-based information that describes normal and/or abnormal content in the dataset associated with the service. Normal content in the dataset may also be referred to "expected" behavior and is indicative of normal operations of the service. Abnormal content may also be referred to as "unexpected" or "anomalous" behavior and is indicative of abnormal operations of the service. In one embodiment, the text-based information can be extracted or derived from logs associated with the dataset. For example, the logs can include machine-generated text and/or codes that indicate an error, a disruption, or an issue (e.g., "failed attempt", "access denied", "dropped exchange", "error code 45409").

In another embodiment, the text-based information can be extracted or derived from documentation (e.g., communications, technical specifications, questionnaires, chatbots) that reflects a service owner's requirements. A service owner requirement indicates plain language thoughts, understandings, and/or interpretations of what amounts to normal and/or abnormal content in the dataset. More specifically, the text-based information can outline when and how the content in the dataset indicates there is likely an issue with the service, thereby reflecting what a service owner is interested in observing with respect to the dataset and/or service. Consequently, the text-based information extracted or derived from documentation is specific to, or customized for, a service owner and can include rules that define issues (e.g., "if latency exceeds two seconds, customers typically close the application"), data value threshold sensitivity indicators (e.g., "we need a high-level of threshold sensitivity for dataset A", "we need a low-level of threshold sensitivity for types of data related to dataset B"), goals for the service (e.g., "we want less than ten abandoned carts each hour"), an indication of sampling preferences (e.g., "we need a high-level of sampling for dataset A", "we need a low-level of sampling for types of data related to dataset B"), and so forth.

After accessing the historical data values in the dataset and the text-based information, the system provides them to one or more AI agents. For example, a first AI agent, e.g., supported by a chain-of-thoughts model, is tuned to interpret the service owner requirements. A second AI agent is tuned to continuously analyze the historical data values and service owner usage indicators to recognize data patterns (e.g., actual data content) and/or usage patterns (e.g., how the service owner uses the dataset). A third AI agent, e.g., supported by a generative language model, is tuned to use the text-based information to determine one or more data value thresholds considering the service owner requirements interpreted by the first AI Agent and the data patterns and/or usage patterns recognized by the second AI agent. A data value threshold can be an upper data value threshold that is useable to detect abnormal content in the dataset or a lower data value threshold that is useable to detect abnormal content in the dataset. Where a type of data includes both an upper data value threshold and a lower data value threshold, a normal operating range for the dataset is reflected. In an embodiment, the one or more data value thresholds are dynamic in that they adjust based on the patterns recognized in the historical data values in the dataset. In another embodiment, the one or more data value thresholds are static in that they do not adjust and are determined based on statistical methods applied to the historical data values in the dataset.

Additionally, the third AI agent is tuned to define sampling rates in accordance with normal content and abnormal content in the dataset. With the aforementioned parameters in mind, the third AI agent is tuned to generate program code useable to monitor current data values in the dataset associated with the service. Based on the monitoring, the program code determines if any one of the current data values violates the one or more data value thresholds and adjusts the sampling rates accordingly. In one example, a current data value violates a data value threshold if it crosses the data value threshold, i.e., moves above an upper data value threshold or moves below a lower data value threshold.

A generative language model, e.g., supporting one or more of the AI agents discussed herein, generates new sequences of text (e.g., the aforementioned program code) provided some inputs. One type of input for a generative language model is a natural language prompt, e.g., a request potentially with some additional context (e.g., the historical data values and the text-based information). A generative language model can be implemented as a neural network, e.g., a decoder-based generative language model, etc. Examples include versions of models such as GPT, BLOOM, PaLM, MISTRAL, COPILOT, and/or LLaMA. Generative language models can be trained to predict tokens in sequences of textual training data. When employed in inference mode, as described herein, the output of a generative language model can include new sequences of text that the model generates, e.g., in a format of executable program code. In the context of this disclosure, the request (or prompt) provided to the generative language model may state "generate program code useable to (i) monitor current data values in a specified dataset associated with a specified service, (ii) determine if any one of the current data values violates the one or more data value thresholds provided service owner requirements and/or usage patterns, and (iii) adjust sampling rates based on transitions between normal content and abnormal content".

As mentioned above, a data value threshold can be dynamic such that it can change from one defined time bin to another defined time bin to accommodate recognized data patterns, e.g., due to seasonality or other types of trends. Seasonality refers to recurring fluctuations in data values for a dataset that occur at regular intervals over a specific period (e.g., hourly, daily, weekly, monthly, yearly). Seasonality is influenced by predictable factors related to time, such as changes in weather, holidays, business cycles, or common human behavior. The AI agent is tuned to determine a data value threshold by testing the historical data values for seasonal patterns in a time series. In one example, the AI agent decomposes the data pattern identified in each time series by removing a seasonal pattern from the historical data values. This decomposition leaves, or produces, a residual set of historical data values. Next, the AI agent applies a power transformation (e.g., a Box-Cox power transformation) to the residual set of historical data values to stabilize the variance and normalize the distribution. The power transformation produces a transformed residual set of historical data values. The AI agent then applies a seasonality-based adjusted boxplot algorithm (e.g., Tukey's range test) to the transformed residual set of historical data values to project a normal range for data values in the dataset across the time bins defined for a time period (e.g., a day, a week, a month, a year) in which the historical data values are generated. The AI agent may use the normal range to determine the one or more data value thresholds (e.g., an upper data value threshold and/or a lower data value threshold). However, the AI agent can calculate a data value threshold in other ways as well. For example, the AI agent can use statistical methods to establish a data value threshold to be a predefined percentage (e.g., 25%, 30%, 40%) below an average data value in the dataset a group of corresponding time bins (e.g., the 9:00-9:10am time bin on Monday through Friday).

The system receives, from the AI agent(s), the program code (e.g., defining the service owner's sampling rule). The system then executes the program code to monitor current data values in the dataset. A current data value is one that is recently collected and ingested (e.g., in real-time or in near real-time). If the monitoring indicates normal content in the dataset, then the system, via execution of the program code, samples a first group of the current data values indicating the normal content in the dataset at a first rate. Again, the normal content is indicated by each current data value in the first group of the current data values not violating the one or more data value thresholds. As described above, the first sampling rate is a lower rate (e.g., 1%, 5%, 10%) to reduce the frequency at which data values are logged and conserve cloud resources. The system streams and/or logs the sampled data values from the first group of the current data values in a sampling cache that is made available to downstream components (e.g., issue identification and mitigation components) deployed for the service. In some embodiments, the first sampling rate is zero, and thus, no sampled data values are logged.

If the monitoring indicates abnormal content in the dataset, then the system, via execution of the program code, samples a second group of the current data values indicating the abnormal content in the dataset at a second rate. Again, the abnormal content is indicated by each current data value in the second group of the current data values violating the one or more data value thresholds. As described above, the second sampling rate is a higher rate (e.g., 15%, 25%, 35%, 80%, 100%) compared to the first sampling rate. In some embodiments, the second sampling rate logs all the current data values in the second group of data values to ensure there is no data loss and that all the critical data that is likely to explain an issue is retained. The system logs the sampled data values from the second group of the current data values in the sampling cache that is made available to the issue identification and mitigation components deployed for the service. With more data values in the dataset to analyze, the downstream issue identification and mitigation components can more efficiently identify and/or mitigate the issue with the service (e.g., reduce false positives).

An additional technical benefit of the present disclosure includes the ability to scale the approach described to different services in an effective and efficient manner. This scaling ability can be realized, for example, because service owners are no longer required to generate their own program code for monitoring, threshold determination, and sampling rate determination purposes. Rather, the service owners can merely describe, in plain text, their thoughts, understandings, and/or interpretations of what amounts to normal and/or abnormal content in their datasets, and the system, via the use of the AI agent(s), can generate customized program code that aligns with a service owner's specific requirements. This can be implemented for a large number of services and services owners. Moreover, the system can provide the program code to service owners for review and/or update the program code as the service owners update their plain language documentation reflecting their thoughts, understandings, and/or interpretations of what amounts to normal and/or abnormal content in their datasets over time. Consequently, there is no need for service owners to generate the program code and/or modify the program code directly.

Additionally, the present disclosure leverages generative AI technology to interpret service owners' requirements in plain language, summarize usage patterns by analyzing queries, alert rules, and summary rules created by service owners, and assess historical data patterns. This automation eliminates the need for service owners to manually modify code and/or configure complex rules, enabling scalable and adaptive data sampling across a vast number of services. By continuously learning from service owner interactions and evolving data trends, the system enhances observability while maintaining efficiency and reducing operational overhead.

Furthermore, service owners have the flexibility to review and modify the automatically generated code and/or sampling rules, ensuring alignment with their specific needs. One benefit of this approach is that it enables the collection of human feedback in the loop, which plays a crucial role in refining and enhancing the performance of the AI agents over time. By incorporating real-world insights and expert adjustments, the system continuously learns and improves, leading to more accurate and efficient code generation and sampling strategies.

Features and technical benefits other than those explicitly described above will be apparent from a reading of the following Detailed Description and a review of the associated drawings. This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

### BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter of a sequence of letters to refer to each individual item. Generic references to the items may use the specific reference number without the sequence of letters.
FIG. 1 is a diagram illustrating an example environment in which a system implements dynamic content-aware data sampling via the use of artificial intelligence.
FIG. 2 is a diagram illustrating examples of text-based information and how artificial intelligence agent(s) can use retrieval augmented generation (RAG) to generate data value thresholds, sampling rates, and/or the program code.
FIG. 3 is a diagram illustrating timing considerations with respect to a time period that spans the historical data values, defined time bins, and a current time bin.
FIG. 4 is a diagram illustrating an example approach to generating dynamic data value thresholds to accommodate seasonality patterns.
FIG. 5 is a diagram illustrating an example of how the dynamic content-aware data sampling can be updated and tailored to a specific service owner.
FIGS. 6A-6B illustrate a flow diagram showing aspects of a method for implementing dynamic content-aware data sampling via the use of artificial intelligence.
FIG. 7 is a computer architecture diagram illustrating an illustrative computer hardware and software architecture for a computing system capable of implementing aspects of the techniques and technologies presented herein.

### DETAILED DESCRIPTION

The techniques and technologies disclosed herein implement dynamic content-aware data sampling that adjusts a sampling rate of data associated with a service based on the content of the data. More specifically, if the data to be logged indicates that the service is operating normally, then the sampling rate is adjusted lower as the logged data has limited purpose provided the service is likely not experiencing an issue. In contrast, if the data indicates that the service is operating abnormally, then the sampling rate is adjusted higher as the logged data has elevated purpose provided the service may be experiencing an issue.

Generally, cloud providers typically implement data sampling at a fixed rate. The fixed rate is higher to ensure there is a sufficient amount of logged data to analyze for issue identification and mitigation purposes. Additionally, the fixed rate is typically used for similar types of data across a large set of services owned by different tenants and/or administrative entities. Consequently, an excessive amount of cloud resources is required to process and/or store the logged data that has been sampled at a high fix rate. Alternatively, cloud providers may implement data sampling dynamically based solely on a volume of data.

The dynamic content-aware data sampling described herein goes beyond fixed rate and/or volume-based sampling by dynamically adjusting the sampling rate based on the actual data content and a service owner's specific needs and goals. More specifically, the dynamic content-aware data sampling described herein intelligently identifies and retains data that signals abnormalities (e.g., anomalies) and/or contains high-value insights most relevant to service owners rather than treating all the data equally. By aligning data retention with what matters more to service owners, e.g., operational efficiency, security, or compliance, the approach described herein ensures that observability remains conscient of the amount of resources used and highly actionable.

The dynamic content-aware data sampling described herein reduces the amount of cloud resources (e.g., the volume of storage needed, the number of processing cycles required) for data logging purposes by limiting the sampling rate during normal operations of the service. For example, a limited sampling rate reduces data volumes at the source, which is essential for lowering network data transmission, minimizing data processing time, and conserving storage resource. Moreover, the dynamic content-aware data sampling described herein retains critical and/or relevant data (e.g., prevents data loss) by increasing the sampling rate during events and/or changes that cause abnormal operations of the service. Consequently, the adaptive approach to sampling described herein ensures that critical data that is likely to explain an issue is retained during periods of abnormal operations.

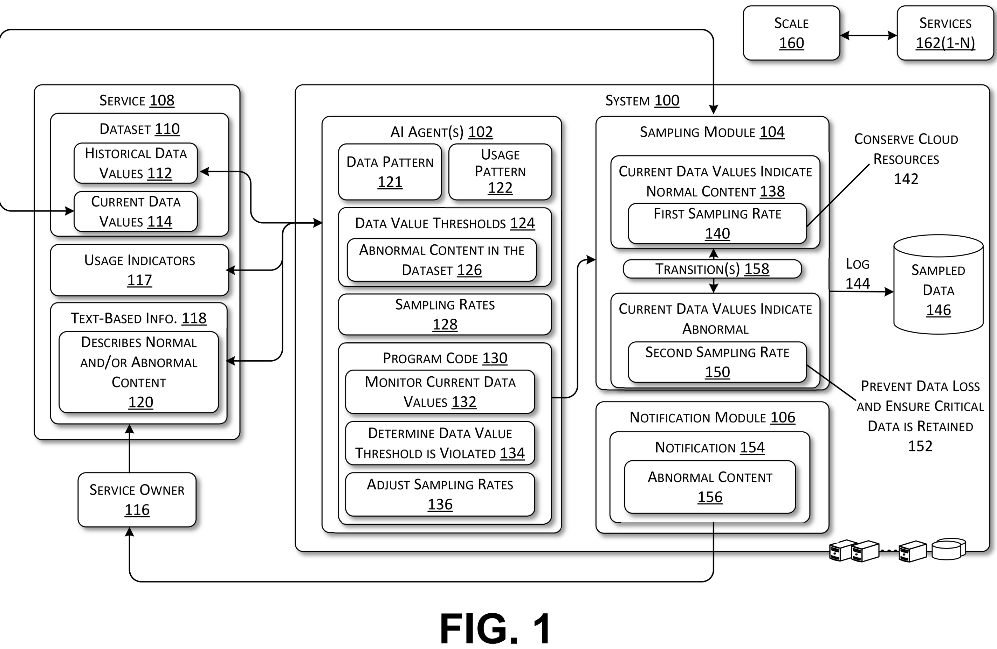

Various examples, scenarios, and aspects of the disclosed techniques that implement dynamic content-aware data sampling are described below with reference to FIGS. 1-7.

FIG. 1 illustrates an example environment in which a system 100 implement dynamic content-aware data sampling for a cloud provider operating infrastructure across a distributed computing environment (e.g., one or more datacenters, one or more edge networks, one or more on-premises networks, or a combination thereof). The system 100 includes one or more artificial intelligence (AI) agent(s) 102, a sampling module 104, and a notification module 106. The number of agents and/or modules illustrated in FIG. 1 is just an example, and the number can vary. That is, functionality described herein in association with the illustrated agents and/or modules can be performed by a fewer number of agents and/or modules or a larger number of agents and/or modules on one device (e.g., server) in the system 100 or spread across multiple devices in the system 100.

As mentioned above, the system 100 uses artificial intelligence to implement the dynamic content-aware data sampling. Accordingly, the system 100 is configured to interact with a service 108 that is associated with the cloud provider (e.g., at least part of the service 108 is executed via the cloud infrastructure of the cloud provider). Accordingly, the system 100 is configured to access a dataset 110 associated with a service 108. A dataset 110 is a structured collection of data. In one example, the structure of the dataset 110 reflects a time sequence at which the service 108 (or the cloud provider) generates and/or provides data values for the dataset 110. As further discussed herein, the data values in the dataset 110 can include historical data values 112 and current data values 114.

The data values in the dataset 110 can be related to a type of data (alternatively referred to as a "metric"). Example types of data include latency, total number of requests, total number of failed requests, throughput, available capacity, a number of declined payments, a number of failed transactions, or any other type of data that is notable for evaluating the performance, the health, and/or the reliability of the service 108. In an embodiment, the system 100 may access the historical data values 112 in the dataset 110 via the exposure of an application programming interface (API) to resources (e.g., storage in the cloud, storage on-premises) of a service owner 116 (e.g., a tenant or administrative entity that configures and/or operates the service 108). That is, the API can be used to receive and/or retrieve the historical data values 112 in the dataset 110.

The system 100 is further configured to access, e.g., via the API, usage indicators 117 (e.g., queries, summary rules, alert rules) that describe how the service owner 116 uses the dataset 110 and/or text-based information 118. The text-based information 118 describes normal and/or abnormal content 120 in the dataset 110. Normal content in the dataset 110 may also be referred to "expected" behavior and is indicative of normal operations of the service 108. Abnormal content may also be referred to as "unexpected" or "anomalous" behavior and is indicative of abnormal operations of the service 108. In one embodiment, the text-based information 118 can be extracted or derived from logs associated with the dataset 110. For example, the logs can include machine-generated text and/or codes that indicate an error, a disruption, or an issue (e.g., "failed attempt", "access denied", "dropped exchange", "error code 45409").

In another embodiment, the text-based information 118 can be extracted or derived from documentation (e.g., communications, technical specifications, questionnaires, chatbots) that reflects the service owner's 116 requirements. A service owner requirement indicates plain language thoughts, understandings, and/or interpretations of what amounts to normal and/or abnormal content in the dataset 110. More specifically, the text-based information 118 can outline when and how the content in the dataset 110 indicates there is likely an issue with the service 108, thereby reflecting what a service owner 116 is interested in observing with respect to the dataset 110 and/or service 108.

After accessing the historical data values 112 in the dataset 110 and the text-based information 118, the system 100 provides them to the AI agent(s) 102. As illustrated, the AI agent(s) 102 are part of the system 100. However, it is understood that the AI agent(s) 102 can alternatively be part of a different system with which the system 100 interacts. An AI agent 102 is tuned to interpret the service owner requirements. An AI agent 102 is tuned to continuously analyze the historical data values 112 and usage indicators 117 to recognize a data pattern 121 (e.g., actual content of the dataset 110) and/or a usage pattern 122 (e.g., how the service owner 116 uses the dataset 110). Furthermore, an AI agent 102 is tuned to use the text-based information 118 to determine one or more data value thresholds 124 useable to detect abnormal content 126 in the dataset 110 considering the service owner requirements and the data patterns 121 and/or usage patterns 122. A data value threshold 124 can be an upper data value threshold that is useable to detect the abnormal content 126 or a lower data value threshold that is useable to detect the abnormal content 126. Alternatively, keyword-based rules and/or context-aware rules can be used to detect abnormal content 126 (e.g., "access denied", "failure"). Where a type of data includes both an upper data value threshold and a lower data value threshold, a normal operating range for the dataset is reflected. In an embodiment, the one or more data value thresholds 124 are dynamic in that they adjust based on the data patterns 121 recognized in the historical data values 112. In another embodiment, the one or more data value thresholds 124 are static in that they do not adjust and are determined based on statistical methods applied to the historical data values 112.

Additionally, an AI agent 102 is tuned to define sampling rates 128 in accordance with the normal content and the abnormal content in the dataset 110. With the aforementioned parameters in mind, the AI agent 102 is tuned to generate program code 130. The program code 130 is useable by the system 100 to monitor 132 the current data values 114 in the dataset 110. Based on the monitoring, the program code 130 determines 134 if any one of the current data values 114 violates the one or more data value thresholds 124. If a violation is determined, the program code 130 adjusts 136 the sampling rates accordingly. In one example, a current data value 114 violates a data value threshold 124 if it crosses the data value threshold, i.e., moves above an upper data value threshold or moves below a lower data value threshold. As described above, the sampling rate is a number of retained data values divided by a total number of incoming data values available for sampling.

The system 100 receives, from the AI agent(s) 102, the program code 130 and passes the program code 130 to the sampling module 104. The sampling module 104 executes the program code 130 to monitor the current data values 114 in the dataset 110. A current data value 114 is one that is recently collected and ingested (e.g., in real-time or in near real-time). If the monitoring indicates normal content 138 in the dataset 110, then the sampling module 104, via execution of the program code 130, samples a first group of the current data values 114 indicating the normal content at a first sampling rate 140. Again, the normal content is indicated by each current data value in the first group of the current data values not violating the one or more data value thresholds 124. As described above, the first sampling rate 140 is a lower rate (e.g., 1%, 5%, 10%) to reduce the frequency at which data values are logged and conserve cloud resources 142. The sampling module 104 logs 144 the sampled data values from the first group of the current data values in a sampling cache configured to store sampled data 146. The sampling cache is made available to issue identification and mitigation components deployed for the service 108. In some embodiments, the first sampling rate 140 is zero (e.g., 0%), and thus, no sampled data values are logged. Stated alternatively, a first sampling rate 140 of zero percent prevents any current data values in the first group of current data values from being logged.

If the monitoring indicates abnormal content 148 in the dataset 110, then the sampling module 104, via execution of the program code 130, samples a second group of the current data values indicating the abnormal content at a second sampling rate 150. Again, the abnormal content is indicated by each current data value in the second group of the current data values violating the one or more data value thresholds 124. As described above, the second sampling rate 150 is a higher rate (e.g., 15%, 25%, 35%, 80%, 100%) compared to the first sampling rate 140 to prevent data loss and to ensure that a sufficient amount of critical data that is likely to explain an issue is retained 152. The sampling module 104 logs 144 the sampled data values from the second group of the current data values in the sampling cache configured to store the sampled data 146. With more data values in the dataset 110 to analyze, the downstream issue identification and mitigation components can more efficiently identify and/or mitigate the issue with the service 108 (e.g., reduce false positives). In some embodiments, the second sampling rate 150 is one hundred percent, thereby logging all the current data values in the second group of data values to ensure there is no data loss and that all the critical data that is likely to explain an issue is retained.

In various examples, the notification module 106 is configured to generate a notification 154 that indicates the abnormal content 156 in the dataset 110, as determined by the sampling module 104. The notification module 106 can transmit the notification 154 to the service owner 116 in response to the detection of the abnormal content 156 in the dataset 110.

Additionally, FIG. 1 highlights that the transition between different sampling rates, as discussed above, can be repeated based on whether the current data values 114 are exhibiting normal content or abnormal content. For example, a further transition 158 can occur when the monitoring indicates a return to normal content 138 for a third group of current data values 114 in the dataset 110. Consequently, the sampling module 104, via execution of the program code 130, samples the third group of the current data values 114 indicating the normal content at the first sampling rate 140, and logs 144 the sampled data accordingly. Similarly, yet another transition 158 can occur when the monitoring indicates another change to abnormal content 148 for a fourth group of current data values 114 in the dataset 110. Consequently, the sampling module 104, via execution of the program code 130, samples the fourth group of the current data values 114 indicating the abnormal content at the second sampling rate 150, and logs 144 the sampled data accordingly

An additional technical benefit of the present disclosure includes the ability to scale 160 the approach described above to different services 162(1-N) in an effective and efficient manner. This scaling 160 ability can be realized, for example, because service owners are no longer required to generate their own program code for monitoring, threshold determination, and sampling rate determination purposes. Rather, the service owners can merely describe, in plain text, their thoughts, understandings, and/or interpretations of what amounts to normal and/or abnormal content in their datasets, and the system 100, via the use of the AI agent(s) 102, can generate customized program code that aligns with a service owner's 116 specific requirements. This can be implemented for a large number of services 162(1-N) and services owners. As further described below, the system 100 can provide the program code to service owners for review and/or update the program code as the service owners update their plain language documentation reflecting their thoughts, understandings, and/or interpretations of what amounts to normal and/or abnormal content in their datasets over time. Consequently, there is no need for service owners to generate the program code and/or modify the program code directly.

Additionally, the system 100 leverages generative AI technology to interpret service owners' requirements in plain language, summarize usage patterns by analyzing queries, alert rules, and summary rules created by service owners, and assess historical data patterns. This automation eliminates the need for service owners to manually modify code and/or configure complex rules, enabling scalable and adaptive data sampling across a vast number of services. By continuously learning from service owner interactions and evolving data trends, the system enhances observability while maintaining efficiency and reducing operational overhead. Furthermore, service owners have the flexibility to review and modify the automatically generated code and/or sampling rules, ensuring alignment with their specific needs. One benefit of this approach is that it enables the collection of human feedback in the loop, which plays a crucial role in refining and enhancing the performance of the AI agents over time. By incorporating real-world insights and expert adjustments, the system continuously learns and improves, leading to more accurate and efficient code generation and sampling strategies.

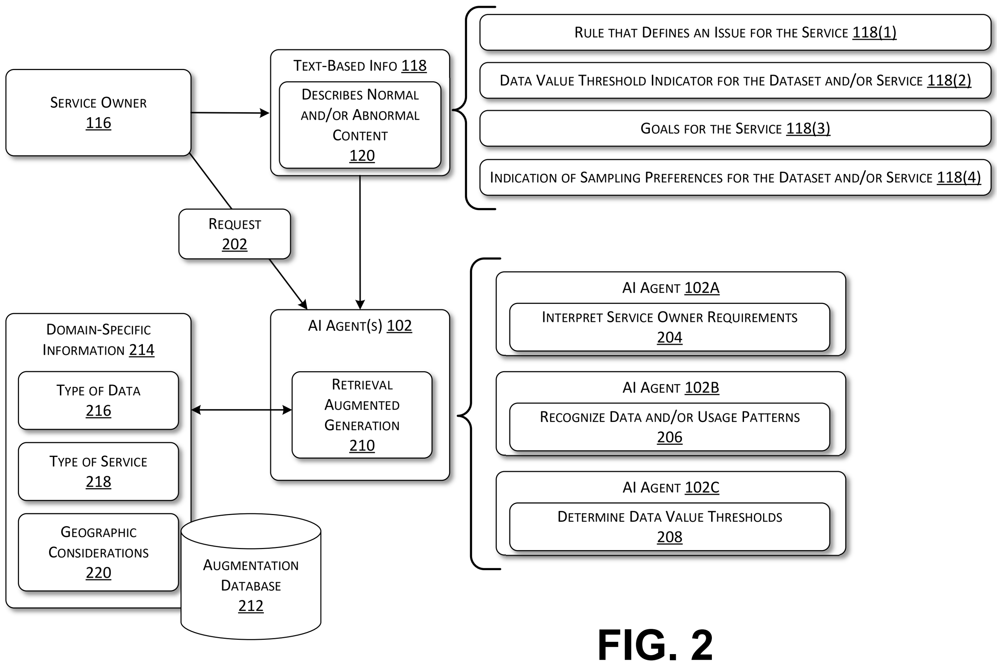

FIG. 2 is a diagram illustrating examples of the text-based information 118 and how the AI agents 102 can use retrieval augmented generation (RAG) to generate data value thresholds, keyword-based or context-aware rules, sampling rates, and/or the program code. The service owner 116 (e.g., a user on an engineer team responsible for the service 108) may have recorded requirements via plain language statements, in various documents, related to normal and/or abnormal content 120 in the dataset 110. A first example type of statement mentions a rule that defines an issue for the service 118(1). For instance, a user may state that "if latency exceeds two seconds, customers typically close the application". A second example type of statement mentions a data value threshold sensitivity indicator for the dataset and/or the service 118(2). For instance, a user may state that "we need a high-level of threshold sensitivity for dataset A" or that "we need a low-level of threshold sensitivity for types of data related to dataset B". A third example type of statement mentions goals for the service 118(3). For instance, a user may state that "we want less than ten abandoned carts each hour". A fourth example type of statement mentions an indication of sampling preferences for the dataset and/or the service 118(4). For instance, a user may state that "we need a high-level of sampling for dataset A" or that "we need a low-level of sampling for types of data related to dataset B". Note that the statements in FIG. 2 are example types of statements, and thus, other types of statements describing, in plain language, a service owner's thoughts, understandings, and/or interpretations of what amounts to normal and/or abnormal content in the dataset are contemplated.

A generative language model that supports an AI agent 102 generates new sequences of text (e.g., the aforementioned program code) provided some inputs. One type of input for a generative language model is a natural language prompt, e.g., a request potentially with some additional context (e.g., the historical data values 112 and the text-based information 118). A generative language model can be implemented as a neural network, e.g., a decoder-based generative language model, etc. Examples include versions of models such as GPT, BLOOM, PaLM, MISTRAL, COPILOT, and/or LLaMA. Generative language models can be trained to predict tokens in sequences of textual training data. When employed in inference mode, as described herein, the output of a generative language model can include new sequences of text that the model generates, e.g., in a format of executable program code 130.

In FIG. 2, the service owner 116 (or alternatively the system 100) provides a request 202 (or prompt) to the AI agent(s) 102, along with the historical data values 112, usage indicators 117, and the text-based information 118. For example, the request 202 may state "generate program code useable to (i) monitor current data values in a specified dataset associated with a specified service, (ii) determine if any one of the current data values violates one or more data value thresholds established based on recognized patterns provided service owner requirement and/or usage patterns, and (iii) adjust sampling rates based on transitions between normal content and abnormal content".

In various examples, the AI agents 102 include a first AI agent 102A, e.g., supported by a chain-of-thoughts model, that is tuned to analyze the text-based information 118 and interpret 204 the service owner requirements. A second AI agent 102B is tuned to continuously analyze the historical data values 112 and usage indicators 117 to recognize 206 data patterns 121 (e.g., actual data content) and/or usage patterns 122 (e.g., how the service owner uses the dataset). A third AI agent 102C, e.g., supported by a generative language model, is tuned to use the service owner requirement (as interpreted by the first AI agent 102A) to determine 208 the data value thresholds, considering the data patterns and/or usage patterns recognized by the second AI agent 102B.

In various examples, the AI agent(s) 102 are tuned to use retrieval augmented generation (RAG) 210 to generate data value thresholds, sampling rates, and/or the program code. To this end, FIG. 2 illustrates an augmentation database 212 that is deployed in conjunction with the AI agent(s) 102. Via RAG 204, the AI agent(s) 102 are able to process the request 202 using domain-specific information 214 stored in the augmentation database 212. The domain-specific information 214 can reflect data value thresholds, sampling rates, and/or program code used by others based on a type of data 216 that matches, or is similar to, the type of data in the dataset 110. Additionally or alternatively, the domain-specific information 214 can reflect data value thresholds, keyword-based and/or context-aware rules, sampling rates, and/or program code used by others based on a type of service 218 that matches, or is similar to, a type of the service 108. Additionally or alternatively, the domain-specific information 214 can reflect data value thresholds, sampling rates, and/or program code used by others based on geographic considerations 220 (e.g., specific countries or regions may have different laws or policies related to data logging and data retention that may need to be taken into account).

Consequently, a RAG-based generative AI model retrieves relevant information from the augmentation database 212 based on content relationships. For example, the RAG-based generative AI model first processes an input query, extracts key entities and context, and then searches the augmentation database 212 to retrieve the most relevant information. This retrieved information is then used to enhance the output generated by the AI agents 102, ensuring more accurate and context-aware outputs. In various examples, the augmentation database 212 is referred to as a knowledge database that is periodically created and updated by ingesting and indexing structured and unstructured data from various sources, such as documents, logs, customer inquiries, regulatory guidelines, and historical usage patterns. This process includes preprocessing steps like text embedding, vectorization, and semantic search optimization to improve retrieval accuracy. By continuously refining and expanding the knowledge database, the RAG-based generative AI model can provide more relevant and precise insights.

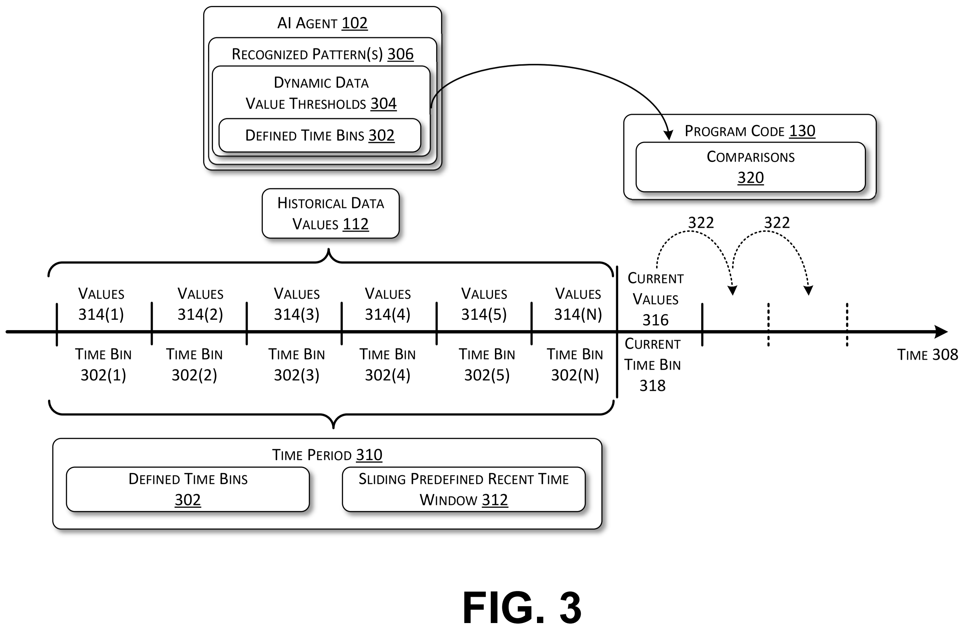

FIG. 3 is a diagram illustrating timing considerations with respect to a time period that spans the historical data values 112, defined time bins 302, and a current time bin. As mentioned above, the data value thresholds 124 can be dynamic data value thresholds 304 such that they can change from one defined time bin to another defined time bin to accommodate recognized data patterns 306, e.g., due to seasonality or other types of trends. Seasonality refers to recurring fluctuations in data values for a dataset that occur at regular intervals over a specified time period (e.g., hourly, daily, weekly, monthly, yearly). Seasonality is influenced by predictable factors related to time, such as changes in weather, holidays, business cycles, or common human content. An AI agent 102 is tuned to determine the dynamic data value thresholds 304 by testing the historical data values 112 for seasonal patterns in a time series.

As shown, FIG. 3 includes a time axis 308. The time period 310 that spans the historical data values 112 is divided into the defined time bins 302 (e.g., one minute, five minutes, ten minutes, one hour). More specifically, the defined time bins 302 are represented by time bin 302(1), time bin 302(2), time bin 302(3), time bin 302(4), time bin 302(5), and time bin 302(N). Thus, six time bins are shown for ease of discussion, i.e., *N* in this example equals six. However, the number N of defined time bins in various time periods 310 is a much larger (e.g., hundreds or thousands of defined time bins). In one example, the time period 310 is a sliding predefined recent time window 312 (e.g., the most recent week, the most recent month, the most recent year).

Each time bin 302(1-N) is configured to produce historical values 314(1-N) for the dataset 110. The time axis 308 further shows current values 316 received and/or accessed for a current time bin 318. The current time bin 318 is mapped to a corresponding time bin, e.g., time bin 302(1), in the time period 310. For example, if the current time bin 318 indicates a particular five minute time period in a week (e.g., 9:00-9:05am local time on a current Tuesday), then the corresponding time bin 302(1) in the time period 310 is the same five minute time period in the previous week or previous weeks (e.g., 9:00-9:05am local time on Tuesday the week before, or for any number of 9:00-9:05am local time slots from previous Tuesdays). In another example, if the current time bin 318 indicates a particular one hour time period in a month (e.g., 9:00-10:00am local time on the first of the current month), then the corresponding time bin 302(1) in the time period 310 is the one hour time period in the previous month(s) (e.g., 9:00-10:00am local time on the first of the previous month(s)).

Accordingly, the dynamic data value thresholds 304 accommodating data patterns 306 recognized across time bins 302 serve as a basis for performing comparisons 320 via the execution of the program code 130. That is, the sampling module 104 compares the current values 316 in current time bin 318 to the dynamic data value thresholds 304 established for the corresponding time bin 302(1) in the time period 310 to determine whether the dataset 110 is exhibiting normal or abnormal content. As represented by the dashed lines/arrows 322, the comparisons 320 are repeated as time progresses and "new" current data values for new current time bins are received or become accessible.

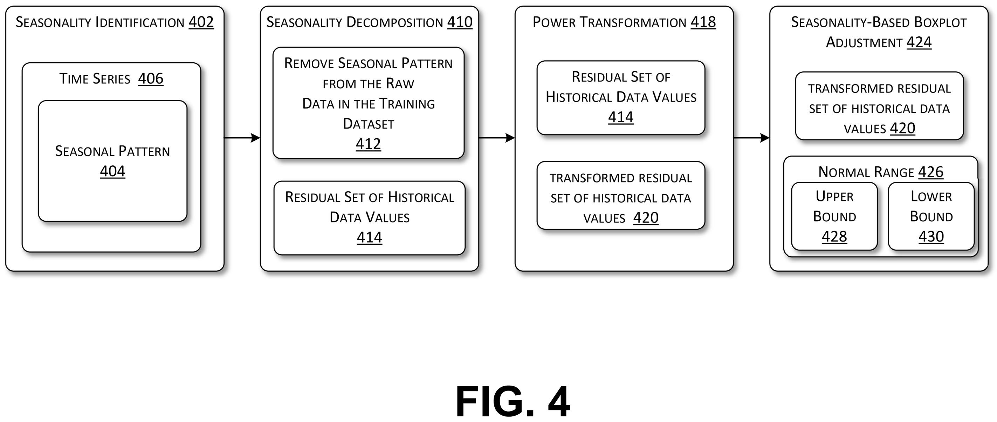

FIG. 4 is a diagram illustrating an example approach to calculating dynamic data value thresholds 304 that accommodate seasonality patterns. An AI agent 102 is first tuned to implement seasonality identification 402 by testing the historical data values 112 for a seasonal pattern 404 in each of one or more time series 406. The time series 406 can include hourly time series, daily time series, weekly time series, monthly time series, yearly time series, and so forth.

Next, the AI agent 102 implements seasonality decomposition 410 by removing 412 the seasonal patterns (e.g., the hourly seasonal pattern, a daily seasonal pattern) from the historical data values 112. This seasonality decomposition 410 leaves, or produces, a residual set of historical data values 414.

Next, the AI agent 102 implements a power transformation 418 on the residual set of historical data values 414 to stabilize the variance and normalize the distribution. The power transformation 418 produces a transformed residual set of historical data values 420. In one example, the power transformation 418 is a Box-Cox power transformation. However, other power transformations such as a low dispersion transformation can be used based on the range, mean, variance, standard deviation, spread, etc. of the residual set of historical data values 414.

The AI agent 102 then implements a seasonality-based boxplot adjustment 424 to the transformed residual set of historical data values 420 to project a normal range 426 for data values in the dataset 110 across the defined time bins 302. The normal range 426 is dynamic such that an upper bound 428 and a lower bound 430 can be calculated for each time bin. In one example, seasonality-based boxplot adjustment 424 is Tukey's Range Test.

The AI agent 102 may use the normal range 426 to determine the dynamic data value thresholds 304 (e.g., an upper data value threshold and/or a lower data value threshold).

The AI agent 102 can calculate a data value threshold 124 in other ways as well. For example, the AI agent 102 can use statistical methods to establish a data value threshold 124 to be a predefined percentage (e.g., 25%, 30%, 40%) below an average data value in the dataset a group of corresponding time bins (e.g., the 9:00-9:10am time bin on Monday through Friday).

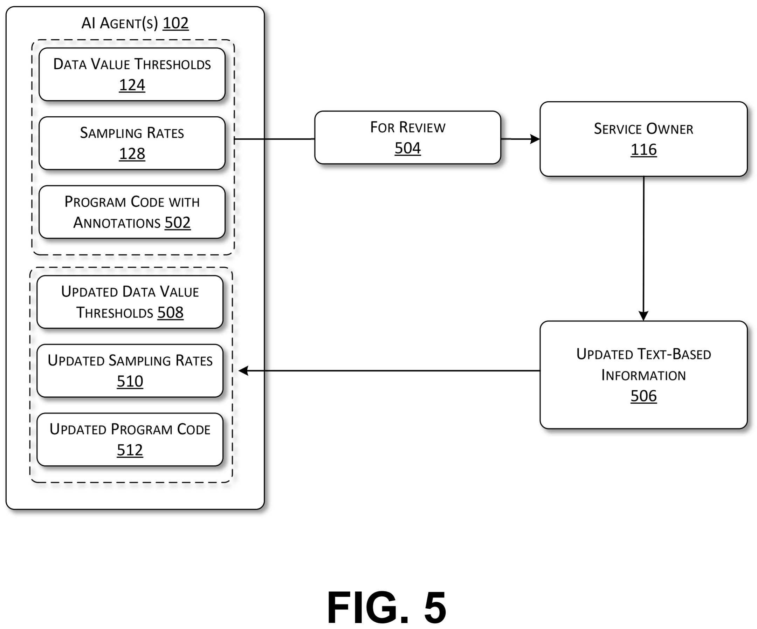

FIG. 5 is a diagram illustrating an example of how the dynamic content-aware data sampling can be updated and tailored to a specific service owner. As shown, the data value thresholds 124, keyword-based and/or context-aware rules, the sampling rates 128, and the program code (e.g., program code 130) with annotations 502, as output by the AI agent(s) 102, are provided to the service owner 116 for review 504. The program code with annotations 502 explains, to the service owner, the customized experience that has been created based on the service owner requirements 204, as well as the data patterns 121 and/or the usage patterns 122. Upon review, the service owner can provide updated text-based information 506 to AI agent(s) 102. Accordingly, the AI agent(s) 102 are tuned to generate updated data value thresholds 508, updated sampling rates 510, and updated program code 512 based on the updated text-based information 506.

Consequently, service owners can update their plain language documentation over time to further reflect their developing thoughts, understandings, and/or interpretations of what amounts to normal and/or abnormal content in their datasets. Moreover, the program code can be updated automatically without the need for service owners to modify the program code directly.

Additionally, the system described herein leverages generative AI technology to interpret service owners' requirements in plain language, summarize usage patterns by analyzing queries, alert rules, and summary rules created by service owners, and assess historical data patterns. This automation eliminates the need for service owners to manually modify code and/or configure complex rules, enabling scalable and adaptive data sampling across a vast number of services. By continuously learning from service owner interactions and evolving data trends, the system enhances observability while maintaining efficiency and reducing operational overhead. Furthermore, service owners have the flexibility to review and modify the automatically generated code and/or sampling rules, ensuring alignment with their specific needs. One benefit of this approach is that it enables the collection of human feedback in the loop, which plays a crucial role in refining and enhancing the performance of the AI agents over time. By incorporating real-world insights and expert adjustments, the system continuously learns and improves, leading to more accurate and efficient code generation and sampling strategies

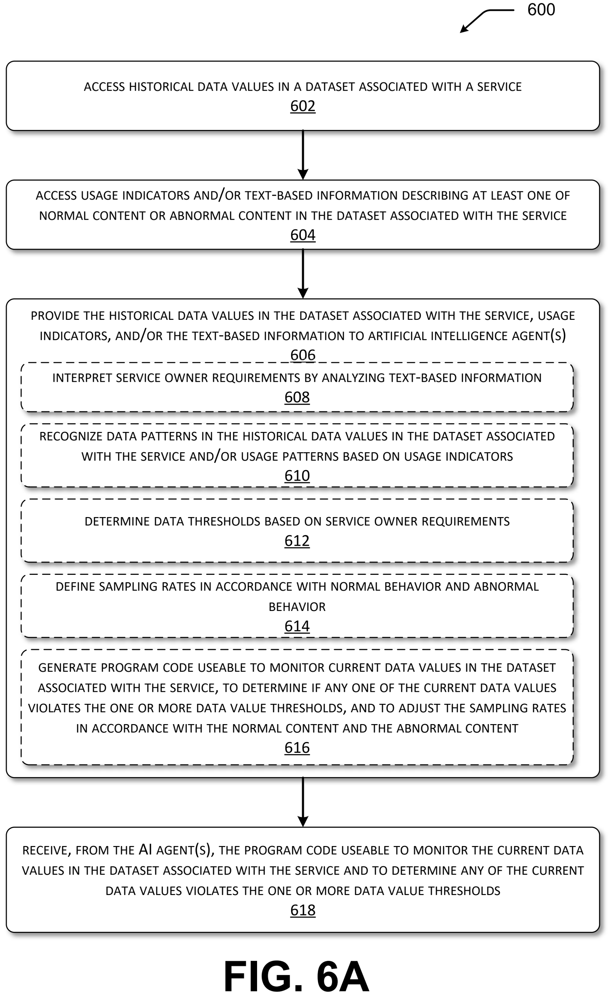

Proceeding to FIG. 6A, aspects of a method 600 for implementing dynamic content-aware data sampling via the use of artificial intelligence are shown. With respect to FIG. 6A, the process 600 begins at operation 602 where the system accesses historical data values in a dataset associated with a service. At operation 604, the system accesses usage indicators (.g., queries, summary rules, alert rules) and/or text-based information describing at least one of normal content or abnormal content in the dataset associated with the service. At operation 606, the system provides the historical data values in the dataset associated with the service, the usage indicators, and/or the text-based information to AI agent(s).

As described above, an AI agent, at operation 608, is tuned to interpret service owner requirements by analyzing the text-based information. Moreover, at operation 610, an AI agent is tuned to recognize data patterns in the historical data values in the dataset associated with the service and/or usage patterns based on the usage indicators. At operation 612, an AI agent is tuned to determine, based on the service owner requirements, one or more data value thresholds (or alternatively, keyword-based and/or context-aware rules) useable to detect the abnormal content in the dataset associated with the service. As described above, the one or more data value thresholds adjust based on the data patterns recognized in the historical data values in the dataset associated with the service. At operation 614, an AI agent is tuned to define sampling rates in accordance with normal content and abnormal content. And at operation 616, an AI agent 102 is tuned to generate program code useable to monitor current data values in the dataset associated with the service, to determine if any one of the current data values violates the one or more data value thresholds, and to adjust the sampling rates in accordance with the normal content and the abnormal content.

At operation 618, the system receives, from the AI agents, the program code useable to monitor the current data values in the dataset associated with the service and to determine any of the current data values violates the one or more data value thresholds.

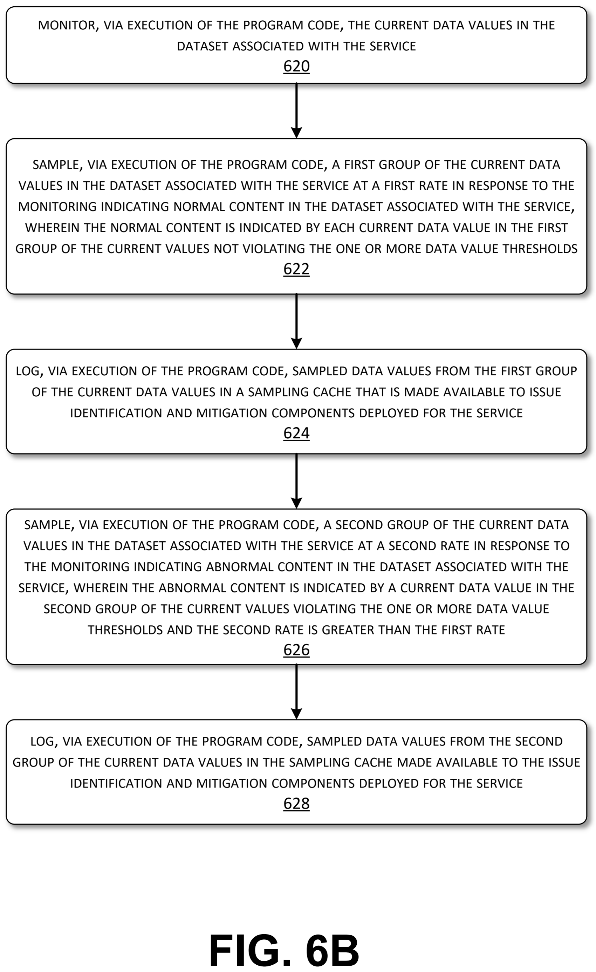

Moving to FIG. 6B, the method 600 continues at operation 620 where the system monitors, via execution of the program code, the current data values in the dataset associated with the service.

At operation 622, the system samples, via execution of the program code, a first group of the current data values in the dataset associated with the service at a first rate in response to the monitoring indicating normal content in the dataset associated with the service, wherein the normal content is indicated by each current data value in the first group of the current values not violating the one or more data value thresholds.

At operation 624, the system logs, via execution of the program code, sampled data values from the first group of the current data values in a sampling cache that is made available to issue identification and mitigation components deployed for the service.

At operation 626, the system samples, via execution of the program code, a second group of the current data values in the dataset associated with the service at a second rate in response to the monitoring indicating abnormal content in the dataset associated with the service, wherein the abnormal content is indicated by a current data value in the second group of the current values violating the one or more data value thresholds and the second rate is greater than the first rate.

At operation 628, the system logs, via execution of the program code, sampled data values from the second group of the current data values in the sampling cache made available to the issue identification and mitigation components deployed for the service.

For ease of understanding, the method discussed in this disclosure is delineated as separate operations represented as independent blocks. However, these separately delineated operations should not be construed as necessarily order dependent in their performance. The order in which the method is described is not intended to be construed as a limitation, and any number of the described method blocks may be combined in any order to implement the method or an alternate method. Moreover, it is also possible that one or more of the provided operations is modified or omitted.

The particular implementation of the technologies disclosed herein is a matter of choice dependent on the performance and other requirements of a computing device. Accordingly, the logical operations described herein are referred to variously as states, operations, structural devices, acts, or modules. These states, operations, structural devices, acts, and modules can be implemented in hardware, software, firmware, in special-purpose digital logic, and any combination thereof. It should be appreciated that more or fewer operations can be performed than shown in the figures and described herein. These operations can also be performed in a different order than those described herein.

It also should be understood that the illustrated method can end at any time and need not be performed in its entirety. Some or all operations of the method, and/or substantially equivalent operations, can be performed by execution of computer-readable instructions included on a computer-storage media, as defined below. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like.

Thus, it should be appreciated that the logical operations described herein are implemented (1) as a sequence of computer implemented acts or program modules running on a computing system and/or (2) as interconnected machine logic circuits or circuit modules within the computing system. The implementation is a matter of choice dependent on the performance and other requirements of the computing system. Accordingly, the logical operations described herein are referred to variously as states, operations, structural devices, acts, or modules. These operations, structural devices, acts, and modules may be implemented in software, in firmware, in special purpose digital logic, and any combination thereof.

For example, the operations of the method 600 can be implemented, at least in part, by modules running the features disclosed herein can be a dynamically linked library (DLL), a statically linked library, functionality produced by an application programing interface (API), a compiled program, an interpreted program, a script, or any other executable set of instructions. Data can be stored in a data structure in one or more memory components. Data can be retrieved from the data structure by addressing links or references to the data structure.

Although the illustration may refer to the components of the figures, it should be appreciated that the operations of the method 600 may also be implemented in other ways. In addition, one or more of the operations of the method 600 may alternatively or additionally be implemented, at least in part, by a chipset working alone or in conjunction with other software modules. In the example described below, one or more modules of a computing system can receive and/or process the data disclosed herein. Any service, circuit, or application suitable for providing the techniques disclosed herein can be used in operations described herein.

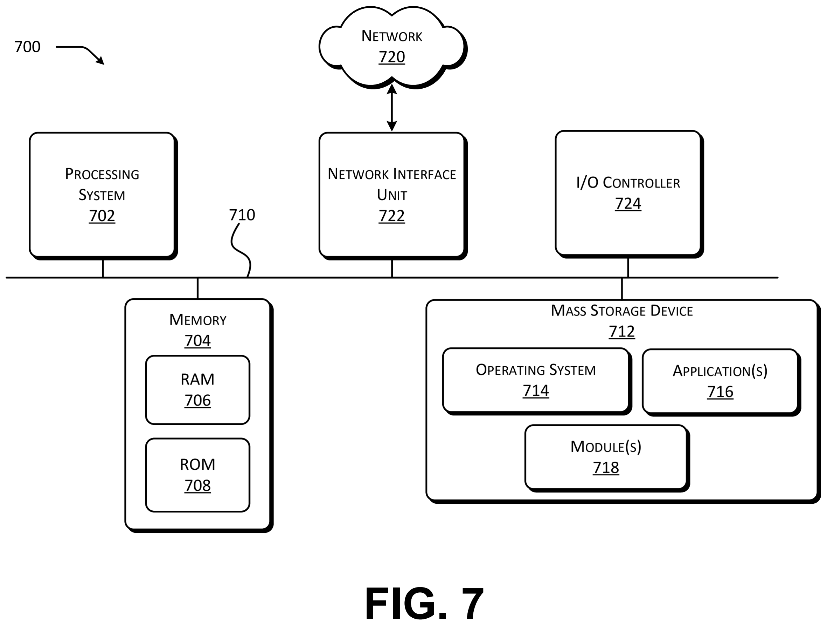

FIG. 7 shows additional details of an example computer architecture 700 for a device, such as a computer or a server configured as part of the system 100, capable of executing computer instructions (e.g., an AI agent, a model, or a module described herein). The computer architecture 700 illustrated in FIG. 7 includes processing system 702, a system memory 704, including a random-access memory 706 (RAM) and a read-only memory (ROM) 708, and a system bus 710 that couples the memory 704 to the processing system 702. The processing system 702 comprises processing unit(s). In various examples, the processing unit(s) of the processing system 702 are distributed. Stated another way, one processing unit of the processing system 702 may be located in a first location (e.g., a rack within a datacenter) while another processing unit of the processing system 702 is located in a second location separate from the first location.

Processing unit(s), such as processing unit(s) of processing system 702, can represent, for example, a CPU-type processing unit, a GPU-type processing unit, a field-programmable gate array (FPGA), another class of digital signal processor (DSP), or other hardware logic components that may, in some instances, be driven by a CPU. For example, illustrative types of hardware logic components that can be used include Application-Specific Integrated Circuits (ASICs), Application-Specific Standard Products (ASSPs), System-on-a-Chip Systems (SOCs), Complex Programmable Logic Devices (CPLDs), and the like.

A basic input/output system containing the basic routines that help to transfer information between elements within the computer architecture 700, such as during startup, is stored in the ROM 708. The computer architecture 700 further includes a mass storage device 712 for storing an operating system 714, application(s) 716, modules 718, and other data described herein.

The mass storage device 712 is connected to processing system 702 through a mass storage controller connected to the bus 710. The mass storage device 712 and its associated computer-readable media provide non-volatile storage for the computer architecture 700. Although the description of computer-readable media contained herein refers to a mass storage device, the computer-readable media can be any available computer-readable storage media or communication media that can be accessed by the computer architecture 700.

Computer-readable media includes computer-readable storage media and/or communication media. Computer-readable storage media includes one or more of volatile memory, nonvolatile memory, and/or other persistent and/or auxiliary computer storage media, removable and non-removable computer storage media implemented in any method or technology for storage of information such as computer-readable instructions, data structures, program modules, or other data. Thus, computer storage media includes tangible and/or physical forms of media included in a device and/or hardware component that is part of a device or external to a device, including RAM, static RAM (SRAM), dynamic RAM (DRAM), phase change memory (PCM), ROM, erasable programmable ROM (EPROM), electrically EPROM (EEPROM), flash memory, compact disc read-only memory (CD-ROM), digital versatile disks (DVDs), optical cards or other optical storage media, magnetic cassettes, magnetic tape, magnetic disk storage, magnetic cards or other magnetic storage devices or media, solid-state memory devices, storage arrays, network attached storage, storage area networks, hosted computer storage or any other storage memory, storage device, and/or storage medium that can be used to store and maintain information for access by a computing device.

In contrast to computer-readable storage media, communication media can embody computer-readable instructions, data structures, program modules, or other data in a modulated data signal, such as a carrier wave, or other transmission mechanism. As defined herein, computer storage media does not include communication media. That is, computer-readable storage media does not include communications media consisting solely of a modulated data signal, a carrier wave, or a propagated signal, per se.

According to various configurations, the computer architecture 700 may operate in a networked environment using logical connections to remote computers through the network 720. The computer architecture 700 may connect to the network 720 through a network interface unit 722 connected to the bus 710. The computer architecture 700 also may include an input/output controller 724 for receiving and processing input from a number of other devices, including a keyboard, mouse, touch, or electronic stylus or pen. Similarly, the input/output controller 724 may provide output to a display screen, a printer, or other type of output device.

The software components described herein may, when loaded into the processing system 702 and executed, transform the processing system 702 and the overall computer architecture 700 from a general-purpose computing system into a special-purpose computing system customized to facilitate the functionality presented herein. The processing system 702 may be constructed from any number of transistors or other discrete circuit elements, which may individually or collectively assume any number of states. More specifically, the processing system 702 may operate as a finite-state machine, in response to executable instructions contained within the software modules disclosed herein. These computer-executable instructions may transform the processing system 702 by specifying how the processing system 702 transition between states, thereby transforming the transistors or other discrete hardware elements constituting the processing system 702.

The disclosure presented herein also encompasses the subject matter set forth in the following clauses.

Example Clause A, a method comprising: accessing historical data values in a dataset associated with a service; accessing text-based information describing at least one of normal content or abnormal content in the dataset associated with the service; providing the historical data values in the dataset associated with the service and the text-based information to one or more artificial intelligence agents, wherein the one or more artificial intelligence agents are tuned to: interpret service owner requirements based on the text-based information; recognize data patterns in the historical data values in the dataset associated with the service; determine, based on the service owner requirements, one or more data value thresholds useable to detect the abnormal content in the dataset associated with the service, wherein the one or more data value thresholds adjust based on the patterns recognized in the historical data values in the dataset associated with the service; define sampling rates in accordance with normal content and abnormal content; and generate program code useable to monitor current data values in the dataset associated with the service, to determine if any one of the current data values violates the one or more data value thresholds, and to adjust the sampling rates in accordance with the normal content and the abnormal content; receiving, from the one or more artificial intelligence agents, the program code useable to monitor the current data values in the dataset associated with the service and to determine any of the current data values violates the one or more data value thresholds; monitoring, via execution of the program code, the current data values in the dataset associated with the service; sampling, via execution of the program code, a first group of the current data values in the dataset associated with the service at a first rate in response to the monitoring indicating normal content in the dataset associated with the service, wherein the normal content is indicated by each current data value in the first group of the current values not violating the one or more data value thresholds; logging, via execution of the program code, sampled data values from the first group of the current data values in a sampling cache that is made available to issue identification and mitigation components deployed for the service; sampling, via execution of the program code, a second group of the current data values in the dataset associated with the service at a second rate in response to the monitoring indicating abnormal content in the dataset associated with the service, wherein the abnormal content is indicated by a current data value in the second group of the current values violating the one or more data value thresholds and the second rate is greater than the first rate; and logging, via execution of the program code, sampled data values from the second group of the current data values in the sampling cache made available to the issue identification and mitigation components deployed for the service.

Example Clause B, the method of Example Clause A, wherein the text-based information is associated with a request for the one or more artificial intelligence agents to generate the program code useable to monitor the current data values in the dataset associated with the service, to determine if any of the current data values violates the one or more data value thresholds, and to adjust the sampling rates.

Example Clause C, the method of Example Clause A or Example Clause B, wherein the text-based information includes at least one of a rule that defines an issue for the service, a data value threshold sensitivity indicator for the dataset or the service, a goal for the service, or an indication of sampling preferences for the dataset or the service.

Example Clause D, the method of any one of Example Clauses A through C, wherein the second sampling rate is one hundred percent thereby logging all the current data values in the second group of current data values.

Example Clause E, the method of any one of Example Clauses A through D, wherein the first sampling rate is zero, thereby preventing any current data values in the first group of current data values from being logged.

Example Clause F, the method of any one of Example Clauses A through E, further comprising transitioning back to sampling, via execution of the program code, a third group of the current data values in the dataset associated with the service at the first rate in response to the monitoring indicating normal content in the dataset associated with the service, wherein the normal content is indicated by each current data value in the third group of the current values not violating the one or more data value thresholds.

Example Clause G, the method of any one of Example Clauses A through F, wherein the one or more artificial intelligence agents use retrieval augmented generation of domain data that is specific to at least one of a type of data in the dataset, a type of the service, or geographic considerations.

Example Clause H, the method of any one of Example Clauses A through G, wherein the one or more data value thresholds comprise one or more dynamic thresholds data value thresholds to accommodate seasonality or another trend.

Example Clause I, the method of any one of Example Clauses A through H, further comprising: providing the program code to a service owner for review; receiving updated text-based information describing at least one of the normal content or the abnormal content in the dataset associated with the service; and providing the updated text-based information to the one or more artificial intelligence agents, wherein the one or more artificial intelligence agents are further tuned to: determine, based on the updated text-based information, one or more updated data value thresholds useable to detect the abnormal content in the dataset associated with the service; define updated sampling rates in accordance with normal content and abnormal content; and generate updated program code useable to monitor the current data values in the dataset associated with the service, to determine if any one of the current data values violates the one or more updated data value thresholds, and to adjust the updated sampling rates in accordance with the normal content and the abnormal content.

Example Clause J, the method of any one of Example Clauses A through I, further comprising: accessing usage indicators reflecting how a service owner uses the dataset; and providing the usage indicators to one or more artificial intelligence agents, wherein the one or more artificial intelligence agents are tuned to analyze the usage indicators to recognize usage patterns and determine the one or more data value thresholds based on the usage patterns.

Example Clause K, a system comprising: a processing system; and a computer-readable medium storing instructions that, when executed by the processing system, cause the system to perform operations comprising: accessing historical data values in a dataset associated with a service; accessing text-based information describing at least one of normal content or abnormal content in the dataset associated with the service; providing the historical data values in the dataset associated with the service and the text-based information to one or more artificial intelligence agents, wherein the one or more artificial intelligence agents are tuned to: interpret service owner requirements based on the text-based information; recognize data patterns in the historical data values in the dataset associated with the service; determine, based on the service owner requirements, one or more data value thresholds useable to detect the abnormal content in the dataset associated with the service, wherein the one or more data value thresholds adjust based on the patterns recognized in the historical data values in the dataset associated with the service; define sampling rates in accordance with normal content and abnormal content; and generate program code useable to monitor current data values in the dataset associated with the service, to determine if any one of the current data values violates the one or more data value thresholds, and to adjust the sampling rates in accordance with the normal content and the abnormal content; receiving, from the one or more artificial intelligence agents, the program code useable to monitor the current data values in the dataset associated with the service and to determine any of the current data values violates the one or more data value thresholds; monitoring, via execution of the program code, the current data values in the dataset associated with the service; sampling, via execution of the program code, a first group of the current data values in the dataset associated with the service at a first rate in response to the monitoring indicating normal content in the dataset associated with the service, wherein the normal content is indicated by each current data value in the first group of the current values not violating the one or more data value thresholds; logging, via execution of the program code, sampled data values from the first group of the current data values in a sampling cache that is made available to issue identification and mitigation components deployed for the service; sampling, via execution of the program code, a second group of the current data values in the dataset associated with the service at a second rate in response to the monitoring indicating abnormal content in the dataset associated with the service, wherein the abnormal content is indicated by a current data value in the second group of the current values violating the one or more data value thresholds and the second rate is greater than the first rate; and logging, via execution of the program code, sampled data values from the second group of the current data values in the sampling cache made available to the issue identification and mitigation components deployed for the service.

Example Clause L, the system of Example Clause K, wherein the text-based information is associated with a request for the one or more artificial intelligence agents to generate the program code useable to monitor the current data values in the dataset associated with the service, to determine if any of the current data values violates the one or more data value thresholds, and to adjust the sampling rates.

Example Clause M, the system of Example Clause K or Example Clause L, wherein the text-based information includes at least one of a rule that defines an issue for the service, a data value threshold sensitivity indicator for the dataset or the service, a goal for the service, or an indication of sampling preferences for the dataset or the service.

Example Clause N, the system of any one of Example Clauses K through M, wherein the second sampling rate is one hundred percent thereby logging all the current data values in the second group of current data values.

Example Clause O, the system of any one of Example Clauses K through N, wherein the first sampling rate is zero, thereby preventing any current data values in the first group of current data values from being logged.

Example Clause P, the system of any one of Example Clauses K through O, wherein the one or more artificial intelligence agents use retrieval augmented generation of domain data that is specific to at least one of a type of data in the dataset, a type of the service, or geographic considerations.

Example Clause Q, the system of any one of Example Clauses K through P, wherein the one or more data value thresholds comprise one or more dynamic thresholds data value thresholds to accommodate seasonality or another trend.

Example Clause R, the system of any one of Example Clauses K through Q, wherein the operations further comprise: providing the program code to a service owner for review; receiving updated text-based information describing at least one of the normal content or the abnormal content in the dataset associated with the service; and providing the updated text-based information to the one or more artificial intelligence agents, wherein the one or more artificial intelligence agents are further tuned to: determine, based on the updated text-based information, one or more updated data value thresholds useable to detect the abnormal content in the dataset associated with the service; define updated sampling rates in accordance with normal content and abnormal content; and generate updated program code useable to monitor the current data values in the dataset associated with the service, to determine if any one of the current data values violates the one or more updated data value thresholds, and to adjust the updated sampling rates in accordance with the normal content and the abnormal content.

Example Clause S, the system of any one of Example Clauses K through R, wherein the operations further comprise: accessing usage indicators reflecting how a service owner uses the dataset; and providing the usage indicators to one or more artificial intelligence agents, wherein the one or more artificial intelligence agents are tuned to analyze the usage indicators to recognize usage patterns and determine the one or more data value thresholds based on the usage patterns.

Example Clause T, a computer-readable storage medium storing instructions that, when executed by a processing system, cause a system to perform operations comprising: accessing historical data values in a dataset associated with a service; accessing text-based information describing at least one of normal content or abnormal content in the dataset associated with the service; providing the historical data values in the dataset associated with the service and the text-based information to one or more artificial intelligence agents, wherein the one or more artificial intelligence agents are tuned to: interpret service owner requirements based on the text-based information; recognize data patterns in the historical data values in the dataset associated with the service; determine, based on the service owner requirements, one or more data value thresholds useable to detect the abnormal content in the dataset associated with the service, wherein the one or more data value thresholds adjust based on the patterns recognized in the historical data values in the dataset associated with the service; define sampling rates in accordance with normal content and abnormal content; and generate program code useable to monitor current data values in the dataset associated with the service, to determine if any one of the current data values violates the one or more data value thresholds, and to adjust the sampling rates in accordance with the normal content and the abnormal content; receiving, from the one or more artificial intelligence agents, the program code useable to monitor the current data values in the dataset associated with the service and to determine any of the current data values violates the one or more data value thresholds; monitoring, via execution of the program code, the current data values in the dataset associated with the service; sampling, via execution of the program code, a first group of the current data values in the dataset associated with the service at a first rate in response to the monitoring indicating normal content in the dataset associated with the service, wherein the normal content is indicated by each current data value in the first group of the current values not violating the one or more data value thresholds; logging, via execution of the program code, sampled data values from the first group of the current data values in a sampling cache that is made available to issue identification and mitigation components deployed for the service; sampling, via execution of the program code, a second group of the current data values in the dataset associated with the service at a second rate in response to the monitoring indicating abnormal content in the dataset associated with the service, wherein the abnormal content is indicated by a current data value in the second group of the current values violating the one or more data value thresholds and the second rate is greater than the first rate; and logging, via execution of the program code, sampled data values from the second group of the current data values in the sampling cache made available to the issue identification and mitigation components deployed for the service.

The techniques describe dynamic content-aware data sampling that adjusts a sampling rate of data associated with a service based on the content of the data. More specifically, if the data to be logged indicates that the service is operating normally, then the sampling rate is adjusted lower as the logged data has limited purpose provided the service is likely not experiencing an issue. In contrast, if the data indicates that the service is operating abnormally, then the sampling rate is adjusted higher as the logged data has elevated purpose provided the service may be experiencing an issue. The dynamic content-aware data sampling is implemented using program code generated by an artificial intelligence agent (e.g., a generative language model) based on service owner requirements, as well as historical data patterns and/or usage patterns.

Conditional language such as, among others, "can," "could," "might" or "may," unless specifically stated otherwise, are understood within the context to present that certain examples include, while other examples do not include, certain features, elements and/or steps. Thus, such conditional language is not generally intended to imply that certain features, elements and/or steps are in any way required for one or more examples or that one or more examples necessarily include logic for deciding, with or without user input or prompting, whether certain features, elements and/or steps are included or are to be performed in any particular example. Conjunctive language such as the phrase "at least one of X, Y or Z," unless specifically stated otherwise, is to be understood to present that an item, term, etc. may be either X, Y, or Z, or a combination thereof.

The terms "a," "an," "the" and similar referents used in the context of describing the invention (especially in the context of the following claims) are to be construed to cover both the singular and the plural unless otherwise indicated herein or clearly contradicted by context. The terms "based on," "based upon," and similar referents are to be construed as meaning "based at least in part" which includes being "based in part" and "based in whole" unless otherwise indicated or clearly contradicted by context.

In addition, any reference to "first," "second," etc. elements within the Summary and/or Detailed Description is not intended to and should not be construed to necessarily correspond to any reference of "first," "second," etc. elements of the claims. Rather, any use of "first" and "second" within the Summary, Detailed Description, and/or claims may be used to distinguish between two different instances of the same element.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A method comprising:
accessing (602) historical data values (112) in a dataset (110) associated with a service (108);
accessing (604) text-based information (118) describing at least one of normal content or abnormal content (120) in the dataset associated with the service;
providing (606) the historical data values in the dataset associated with the service and the text-based information to one or more artificial intelligence agents (102), wherein the one or more artificial intelligence agents are tuned to:
interpret (608) service owner requirements based on the text-based information;
recognize (610) data patterns (121) in the historical data values in the dataset associated with the service;
determine (612), based on the service owner requirements, one or more data value thresholds (124) useable to detect the abnormal content in the dataset associated with the service, wherein the one or more data value thresholds adjust based on the patterns recognized in the historical data values in the dataset associated with the service;
define (614) sampling rates (128) in accordance with normal content and abnormal content; and
generate (616) program code (130) useable to monitor current data values (114) in the dataset associated with the service, to determine if any one of the current data values violates the one or more data value thresholds, and to adjust the sampling rates in accordance with the normal content and the abnormal content;
receiving (618), from the one or more artificial intelligence agents, the program code useable to monitor the current data values in the dataset associated with the service and to determine any of the current data values violates the one or more data value thresholds;
monitoring (620), via execution of the program code, the current data values in the dataset associated with the service;
sampling (622), via execution of the program code, a first group of the current data values (138) in the dataset associated with the service at a first rate (140) in response to the monitoring indicating normal content in the dataset associated with the service, wherein the normal content is indicated by each current data value in the first group of the current values not violating the one or more data value thresholds;
logging (624), via execution of the program code, sampled data values (146) from the first group of the current data values in a sampling cache that is made available to issue identification and mitigation components deployed for the service;
sampling (626), via execution of the program code, a second group of the current data values (148) in the dataset associated with the service at a second rate (150) in response to the monitoring indicating abnormal content in the dataset associated with the service, wherein the abnormal content is indicated by a current data value in the second group of the current values violating the one or more data value thresholds and the second rate is greater than the first rate; and
logging (628), via execution of the program code, sampled data values (146) from the second group of the current data values in the sampling cache made available to the issue identification and mitigation components deployed for the service.

2. The method of claim 1, wherein the text-based information is associated with a request for the one or more artificial intelligence agents to generate the program code useable to monitor the current data values in the dataset associated with the service, to determine if any of the current data values violates the one or more data value thresholds, and to adjust the sampling rates.

3. The method of claim 1 or claim 2, wherein the text-based information includes at least one of a rule that defines an issue for the service, a data value threshold sensitivity indicator for the dataset or the service, a goal for the service, or an indication of sampling preferences for the dataset or the service.

4. The method of any one of claims 1 through 3, wherein the second sampling rate is one hundred percent thereby logging all the current data values in the second group of current data values.

5. The method of any one of claims 1 through 4, wherein the first sampling rate is zero, thereby preventing any current data values in the first group of current data values from being logged.

6. The method of any one of claims 1 through 5, further comprising transitioning back to sampling, via execution of the program code, a third group of the current data values in the dataset associated with the service at the first rate in response to the monitoring indicating normal content in the dataset associated with the service, wherein the normal content is indicated by each current data value in the third group of the current values not violating the one or more data value thresholds.

7. The method of any one of claims 1 through 6, wherein the one or more artificial intelligence agents use retrieval augmented generation of domain data that is specific to at least one of a type of data in the dataset, a type of the service, or geographic considerations.

8. The method of any one of claims 1 through 7, wherein the one or more data value thresholds comprise one or more dynamic thresholds data value thresholds to accommodate seasonality or another trend.

9. The method of any one of claims 1 through 8, further comprising:
providing the program code to a service owner for review;
receiving updated text-based information describing at least one of the normal content or the abnormal content in the dataset associated with the service; and
providing the updated text-based information to the one or more artificial intelligence agents, wherein the one or more artificial intelligence agents are further tuned to:
determine, based on the updated text-based information, one or more updated data value thresholds useable to detect the abnormal content in the dataset associated with the service;
define updated sampling rates in accordance with normal content and abnormal content; and
generate updated program code useable to monitor the current data values in the dataset associated with the service, to determine if any one of the current data values violates the one or more updated data value thresholds, and to adjust the updated sampling rates in accordance with the normal content and the abnormal content.

10. The method of any one of claims 1 through 9, further comprising:
accessing usage indicators reflecting how a service owner uses the dataset; and
providing the usage indicators to one or more artificial intelligence agents, wherein the one or more artificial intelligence agents are tuned to analyze the usage indicators to recognize usage patterns and determine the one or more data value thresholds based on the usage patterns.

11. A system (100) comprising:
a processing system; and
a computer-readable medium storing instructions that, when executed by the processing system, cause the system to perform operations comprising:
accessing (602) historical data values (112) in a dataset (110) associated with a service (108);
accessing (604) text-based information (118) describing at least one of normal content or abnormal content (120) in the dataset associated with the service;
providing (606) the historical data values in the dataset associated with the service and the text-based information to one or more artificial intelligence agents (102), wherein the one or more artificial intelligence agents are tuned to:
interpret (608) service owner requirements based on the text-based information;
recognize (610) data patterns (121) in the historical data values in the dataset associated with the service;
determine (612), based on the service owner requirements, one or more data value thresholds (124) useable to detect the abnormal content in the dataset associated with the service, wherein the one or more data value thresholds adjust based on the patterns recognized in the historical data values in the dataset associated with the service;
define (614) sampling rates (128) in accordance with normal content and abnormal content; and
generate (616) program code (130) useable to monitor current data values (114) in the dataset associated with the service, to determine if any one of the current data values violates the one or more data value thresholds, and to adjust the sampling rates in accordance with the normal content and the abnormal content;
receiving (618), from the one or more artificial intelligence agents, the program code useable to monitor the current data values in the dataset associated with the service and to determine any of the current data values violates the one or more data value thresholds;
monitoring (620), via execution of the program code, the current data values in the dataset associated with the service;
sampling (622), via execution of the program code, a first group of the current data values (138) in the dataset associated with the service at a first rate (140) in response to the monitoring indicating normal content in the dataset associated with the service, wherein the normal content is indicated by each current data value in the first group of the current values not violating the one or more data value thresholds;
logging (624), via execution of the program code, sampled data values (146) from the first group of the current data values in a sampling cache that is made available to issue identification and mitigation components deployed for the service;
sampling (626), via execution of the program code, a second group of the current data values (148) in the dataset associated with the service at a second rate (150) in response to the monitoring indicating abnormal content in the dataset associated with the service, wherein the abnormal content is indicated by a current data value in the second group of the current values violating the one or more data value thresholds and the second rate is greater than the first rate; and
logging (628), via execution of the program code, sampled data values (146) from the second group of the current data values in the sampling cache made available to the issue identification and mitigation components deployed for the service.

12. The system of claim 11, wherein:
the text-based information is associated with a request for the one or more artificial intelligence agents to generate the program code useable to monitor the current data values in the dataset associated with the service, to determine if any of the current data values violates the one or more data value thresholds, and to adjust the sampling rates; or
wherein the text-based information includes at least one of a rule that defines an issue for the service, a data value threshold sensitivity indicator for the dataset or the service, a goal for the service, or an indication of sampling preferences for the dataset or the service.

13. The system of claim 11 or claim 12, wherein:
the second sampling rate is one hundred percent thereby logging all the current data values in the second group of current data values; or
the first sampling rate is zero, thereby preventing any current data values in the first group of current data values from being logged.

14. The system of any one of claims 11 through 13, wherein:
the one or more artificial intelligence agents use retrieval augmented generation of domain data that is specific to at least one of a type of data in the dataset, a type of the service, or geographic considerations; or
the one or more data value thresholds comprise one or more dynamic thresholds data value thresholds to accommodate seasonality or another trend.

15. A computer-readable storage medium storing instructions that, when executed by a processing system, cause a system (100) to perform operations comprising:
accessing (602) historical data values (112) in a dataset (110) associated with a service (108);
accessing (604) text-based information (118) describing at least one of normal content or abnormal content (120) in the dataset associated with the service;
providing (606) the historical data values in the dataset associated with the service and the text-based information to one or more artificial intelligence agents (102), wherein the one or more artificial intelligence agents are tuned to:
interpret (608) service owner requirements based on the text-based information;
recognize (610) data patterns (121) in the historical data values in the dataset associated with the service;
determine (612), based on the service owner requirements, one or more data value thresholds (124) useable to detect the abnormal content in the dataset associated with the service, wherein the one or more data value thresholds adjust based on the patterns recognized in the historical data values in the dataset associated with the service;
define (614) sampling rates (128) in accordance with normal content and abnormal content; and
generate (616) program code (130) useable to monitor current data values (114) in the dataset associated with the service, to determine if any one of the current data values violates the one or more data value thresholds, and to adjust the sampling rates in accordance with the normal content and the abnormal content;
receiving (618), from the one or more artificial intelligence agents, the program code useable to monitor the current data values in the dataset associated with the service and to determine any of the current data values violates the one or more data value thresholds;
monitoring (620), via execution of the program code, the current data values in the dataset associated with the service;
sampling (622), via execution of the program code, a first group of the current data values (138) in the dataset associated with the service at a first rate (140) in response to the monitoring indicating normal content in the dataset associated with the service, wherein the normal content is indicated by each current data value in the first group of the current values not violating the one or more data value thresholds;
logging (624), via execution of the program code, sampled data values (146) from the first group of the current data values in a sampling cache that is made available to issue identification and mitigation components deployed for the service;
sampling (626), via execution of the program code, a second group of the current data values (148) in the dataset associated with the service at a second rate (150) in response to the monitoring indicating abnormal content in the dataset associated with the service, wherein the abnormal content is indicated by a current data value in the second group of the current values violating the one or more data value thresholds and the second rate is greater than the first rate; and
logging (628), via execution of the program code, sampled data values (146) from the second group of the current data values in the sampling cache made available to the issue identification and mitigation components deployed for the service.
